(19) Europäisches Patentamt
European Patent Office
Office européen des brevets

(11) Publication number: **0 179 592 A2**

# (12) EUROPEAN PATENT APPLICATION

(21) Application number: 85307174.4

(22) Date of filing: 08.10.85

(51) Int. Cl.⁴: G 02 F 1/137
G 02 F 1/133, C 09 K 19/20
C 09 K 19/46

(30) Priority: 25.10.84 GB 8426976

(43) Date of publication of application:
30.04.86 Bulletin 86/18

(84) Designated Contracting States:
AT BE CH DE FR IT LI LU NL SE

(71) Applicant: ITT INDUSTRIES INC.
320 Park Avenue
New York, NY 10022(US)

(84) Designated Contracting States:
BE CH FR IT LI LU NL SE AT

(71) Applicant: Deutsche ITT Industries GmbH
Hans-Bunte-Strasse 19 Postfach 840
D-7800 Freiburg(DE)

(84) Designated Contracting States:
DE

(72) Inventor: Crossland, William Alden
15 School Lane
Harlow Essex(GB)

(72) Inventor: Davey, Anthony Bernard
26 Boyd Close Bishops Stortford
Hertfordshire(GB)

(72) Inventor: Bone, Matthew Francis
47 Newton Road Bishops Stortford
Hertfordshire(GB)

(74) Representative: Vaufrouard, John Charles et al,
ITT Patent Department UK Maidstone Road Foots Cray
Sidcup KentDA14 5HT(GB)

## (54) Ferroelectric liquid crystal display cells.

(57) A bistable ferroelectric liquid crystal smectic I* or smectic F* display cell has a liquid crystal layer confined between opposed electrode plates (14, 15). The inward facing surfaces are heated to provide planar alignment of the adjacent liquid crystal molecules in the same direction at each of the two surfaces. the plates serve to define a liquid crystal layer in the range 4 to 40 microns but which still permits bistable operation.

Fig. 1.

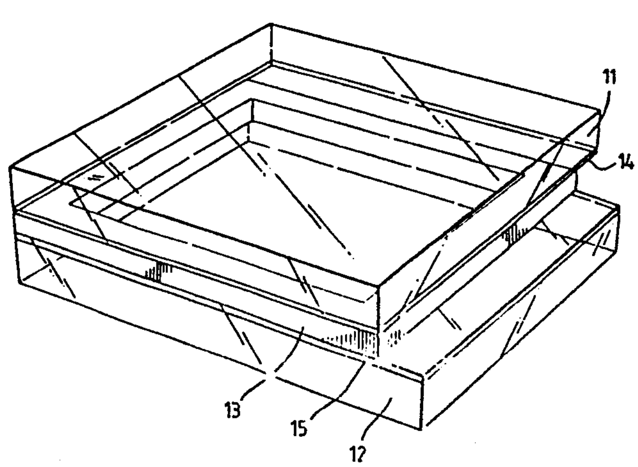


EP 0 179 592 A2

# FERROELECTRIC LIQUID CRYSTAL DISPLAY CELLS

This invention relates to ferroelectric smectic liquid crystal display cells.

The first types of liquid crystal display cell to be used as display devices employed nematic or cholesteric phases. Those that operated in field effect mode could typically be operated with signal strengths of a few volts, but when the exciting field was removed, the liquid crystal always relaxed back into the same state within a short period of time. UK Patent Specification No. 1557199 describes how an electrically addressable non-volatile liquid crystal display can be provided. This employs a smectic A liquid crystal filling to provide bistability of operation. A drawback of this approach was that it required a significantly greater drive voltage. Later, in a paper entitled 'Submicrosecond bistable electro-optic switching in liquid crystals' by N.A. Clark and S.T. Lagerwall appearing in Applied Physics Letters Vol. 36 No. 11 pp 889-901 (June, 1980), a bistable cell switchable with smaller voltages was described that employed a ferroelectric smectic C liquid crystal filling.

The terms 'bistable' and 'bistability' are used here and elsewhere in this specification in relation to a situation in which a liquid crystal is electrically switchable between two latching states that are optically distinct on a macroscopic scale so that under appropriate illumination conditions,

for instance by direct viewing or by viewing in position between appropriately oriented crossed polarisers, the cell is capable of functioning as a display element electrically switchable between two latched conditions of contrasting appearance.

In order to exhibit ferroelectricity, a smectic material must not only exist in an tilted smectic state such as Smectic C, I or F, but it must also be constituted by a material that is intrinsically chiral, or it must include a chiral constituent to provide chirality. For a definition of the ordering of the different smectic phases, reference may be made to the book entitled 'Smectic Liquid Crystals Textures and Structures' by G.W. Gray and J.W. Goodby, published by Leonard Hill (1984), and in particular to the diagrams appearing on page 153 of that book. According to convention chirality may be signified by an *, and thus the material employed in the Clark and Lagerwall cell may be described as a C* material.

The chirality of a ferroelectric liquid crystal material in a C*, I* or F* phase means that its molecules have a natural tendency to align themselves in progressively different directions in succeeding smectic layers. If the layers are arranged in parallel planes this progression defines a helix, and the pitch of this helix is typically in the region of 2 to 3 microns unless it has been lengthened by diluting the chiral molecules with non-chiral ones or with further chiral molecules of the opposite handedness.

The Clark and Lagerwall paper previously referred to describes the bistable operation of a cell with a 1.5 micron thick layer of DOBAMBC or HOBACPC maintained in a C* phase with its smectic

layers aligned in parallel planes perpendicular to the plane of the liquid crystal layer itself. Under these conditions it was observed that the tendency to helical arrangement of the liquid crystal molecules had been suppressed, and the authors attributed the bistable operation they found to this suppression of the helical structure by surface stabilisation.

In a later paper entitled 'Ferroelectric Liquid Crystal Electro-Optics using the Surface Stabilised Structure' appearing in Mol. Cryst. Liq. Cryst. 1983 Vol. 94 pp 213-234 these authors, in collaboration with M.A. Handschy, report further about work undertaken with such cells, describe the bistability observed in a cell containing a 2 micron thick layer of C* phase DOBAMBC, and in both C* and I* HOBACPC in a cell 1.5 microns thick cell. (In this paper the I* phase of HOBACPC has been incorrectly identified as the F* phase, but this has been corrected in later publications.)

The validity of the theory that the suppression of helix formation is effective in providing bistability of operation has been investigated by ourselves and others. In our work with C* phase material we have been unable to demonstrate any bistability of operation in cells providing a liquid crystal layer thickness of 4 microns or greater even when the pitch of the bulk material filling the cell was several times greater than the layer thickness. This finding is given support in the literature. Thus P.E. Cladis and H.R. Brand, in a paper entitled '"Soliton switch" in chiral smectic liquid crystals', appearing in Physical Review A Vol. 28 No. 1 pp 512-4 (July 1983), report that in their investigations performed

using 10 microns thick cells filled with C* phase materials having pitches in the range from 10 to 100 microns they found no evidence of bistability even with switching fields as high as 6 x $10^5$ V $cm^{-1}$. This paper concludes with the sentence, 'Furthermore, we have demonstrated that, in general, production of samples with a thickness smaller than the pitch does not lead to bistability in chiral smectics'. Similarly in a paper entitled 'Synthesis, Properties and Applications of Ferroelectric Smectic Liquid Crystals' appearing in Ferroelectrics, 1983, Vol. 49 pp 275 to 284, in the section entitled 'Applications", J.W. Goodby states that, 'The smectic phases C*, I* and F* can be used in three different ways. (1) Thin cells, 1-3 microns thick in which the helix is unwound and the cell is bistable. The switching speed from one tilt domain to another is in the microsecond range. Optical contrast is achieved with crossed polarisers. (2) Thick cells where the helix is unwound. The cell is not bistable but the switching speed can still be in the microsecond range. This cell has similar viewing angle properties and contrast to a conventional twisted nematic device. (3) Thick cells where the helix is not unwound. The cell is not bistable and has similar properties to (2)'.

In summary, for C* phase material of any pitch, no bistability of operation has been reported for cells having a liquid crystal layer thickness of greater than 3 microns. Similarly no prior art reports any other type of ferroelectric cell with a liquid crystal layer thickness greater than 3 microns that exhibits bistability of operation. It is believed that, for pitches up at least to several

tens of microns, the pitch is unwound when the layer thickness is less than the pitch. It therefore appears that the suppression of pitch is not the paramount factor determining whether or not bistability of operation is exhibited. We believe that bistability is determined by the type of order present in the phase of the material prsent in the cell.

The present invention is concerned with ferro-electric liquid crystal display cells having liquid crystal layer thicknesses significantly in excess of 3 microns that do exhibit bistability. More particularly the present invention is concerned with the discovery that the behaviour of I* and F* materials is sufficiently different from that of C* materials to allow the essentially bistable operation of I* and F* material filled display cells having a liquid crystal layer thickness significantly greater than the limit in the region of 3 microns that is characteristic of known display cells employing C* material. This bistability in I* and F* material filled cells does not necessarily require the surface stabilised suppression of the helices by virtue of the thinness of the liquid crystal layer. In the case of I* or F* material it is believed that the unwinding of the helix is a bulk stabilised effect resulting from an extensive three dimensional bond orientational ordering present in such I* and F* materials. The presence of a bulk stabilised effect, rather than a surface stabilised one, may be directly inferred from the observation of the behaviour of pitch lines in a cell whose liquid crystal layer thickness is so great that pitch lines appear or are retained when the cell is cooled into the I* or F* phase in the

absence of an applied electric field. When an electric field of sufficient strength is first applied these pitch lines disappear, but when the field is removed they do not immediately reappear. The presence of the pitch lines, before the application of the field, indicates that the layer was not surface stabilised; whereas the absence of pitch lines after removal of the electrical field indicates that stabilisation has been effected by some phenomenen other than surface stabilisation. The surface thus appears to play a secondary role in the bistable operation of these I* and F* cells. Experiments have however revealed that this bistability does not extend indefinitely with liquid crystal layer thickness, but has been shown that at least with certain materials to exist out to thicknesses well in excess of 20 microns.

According to the present invention there is provided a ferroelectric liquid crystal display cell exhibiting bistability of operation, which cell has a smectic I* or F* phase liquid crystal layer confined between opposed electroded plates whose inward facing surfaces have been treated to promote planar alignment of the adjacent liquid crystal molecules in the same direction at each f the two surfaces, which plates serve to define a liquid crystal layer in the range from 4 to 40 microns.

Generally, it is preferred to employ a liquid crystal layer thickness of less than 20 microns.

In order that the invention and its various other preferred features may be understood more easily, some embodiments thereof will now be described, by way of example only, with reference to the drawings, in which:-

Figure 1 depicts a schematic perspective view of a display cell constructed in accordance with the invention,

Figure 2 is a graph of a log log plot of switching pulse duration and switching pulse voltage, for a specific filling and thickness of cell constructed according to Figure 1, and

Figure 3 is a similar graph plotting results obtained with a different filling and thickness.

A hermetically sealed envelope for liquid crystal layer is formed by securing together two glass sheets 11 and 12 with a perimeter seal 13. The inward facing surface of the two sheets carry transparent electrode layers 14 and 15 of indium tin oxice, and each of these electrode layers is covered within the display area defined by the perimeter seal with a polymer layer, such as polyimide (not shown), provided for molecular alignment purposes. Both polyimide layers are rubbed in a single direction so that when a liquid crystal is brought into contact with them they will tend to promote planar alignment of the liquid crystal molecules in the direction of the rubbing. The cell is assembled with the rubbing directions aligned parallel with each other. The thickness of the liquid crystal layer contained within the resulting envelope is determined by the thickness of the perimeter seal, and control over the precision of this may be provided by a light scattering of short lengths of glass fibre (not shown) of uniform diameter distributed through the material of the perimeter seal. Conveniently the cell is filled by applying a vacuum to an aperture (not shown) through one of the glass sheets in one corner of the area enclosed by

the perimeter seal so as to cause the liquid crystal medium to enter the cell by way of another aperture (not shown) located in the diagonally opposite corner. (Subsequent to the filling operation the two apertures are sealed.) The filling operation is carried out with the filling material heated into its isotropic phase so as to reduce its viscosity to a suitably low value. It will be noted that the basic construction of the cell is similar to that of for instance a conventional twisted nematic, except of course for the parallel alignment of the rubbing directions. For one example the liquid crystal filling of a 10.7 micron thickness cell was the chiral ester.

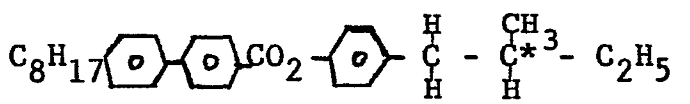 ,

this material being marketed by BDH under the designation CE8. When heating this material from the crystalline state the following transition temperatures were noted:-

| | | |
|---|---|---|
| | Smectic J* to Smectic I* | $67^{o}C$ |
| | Smectic I* to Smectic C* | $70.3^{o}C$ |
| | Smectic C* to Smectic A | $80.7^{o}C$ |
| | Smectic A to Cholesteric | $135^{o}C$ |
| and | Cholesteric to Isotropic | $140^{o}C$. |

When, after filling, the cell was slowly cooled the planar alignment inducing nature of the rubbed polyimide surfaces caused the alignment of the smectic layers formed on entering the smectic A phase to be in planes normal to the rubbing direction, and hence perpendicular to the planes of the major surfaces of the liquid crystal layer. This alignment of the smectic layers was maintained

as the liquid cooled into the smectic C* phase even though the orientations of the molecules within those smectic layers changed upon entering the C* phase. At this stage pitch lines could be observed. This indicated that the cell was too thick for unwinding the helix solely by surface effects. This was to be expected since the liquid crystal layer thickness was considerably greater than the helix pitch (about 2 microns for this material in the C* phase). A slight change of scale in the pitch lines (c. 10%) was observed when, upon further cooling, the filling entered the I* phase.

With the cell maintained at a temperature of 69.8$^{o}$C so that its filling was maintained in the I* phase, a series of tests were performed to see how switching was affected by voltage. For this purpose the cell was mounted between crossed polarisers aligned with their polarisation planes at 45$^{o}$ to the rubbing direction. A plot of the results is illustrated in the graph of Figure 2 where the log of pulse duration is plotted as a function of the log of pulse voltage. In practice the results were obtained by increasing the voltage of a pulse of known duration. For each pulse length there is plotted a transient effect threshold voltage at which the effect of the switching voltage first becomes noticeable but is not sustained. The corresponding bistable effect threshold voltage is a measure of the larger voltage at which switching is established with no significant relaxation even over periods exceeding 2 hours. (It is believed that relaxation may not be noticeable for a considerably longer period, but with the particular apparatus being employed it was not possible to establish this because adequate temperature stabilisation could not

be ensured over periods significantly longer than 2 hours.) From Figure 2 it is seen that the bistable switching time varies approximately with the inverse of the voltage over the range 115 volts down to about 25 volts. At lower voltages down to about 12.5 volts it varies approximately as the inverse sixth power of the voltage, while at still lower voltages, with pulse duration in excess of 10msec, it varies approximately as the inverse square of voltage. When the cell was first bistably switched with an electric field the helix lines disappeared and did not reappear while the cell was maintained in the smectic I* phase. A second cell was constructed using a thicker perimeter seal providing a liquid crystal layer thickness of about 20 microns. This showed similar properties of bistability to those of the 10.7 micron cell, though the switching voltages were higher.

A third cell was then constructed with a spacing of about 30 microns. In this instance there was not true bistability, and noticeable relaxation effects could be observed within a few seconds of pulsing. It is believed that this results because the liquid crystal layer is now so thick that the alignment of the smectic layers in planes at right angles to the confining surfaces is no longer adequately enforced throughout the layer thickness. It is similarly believed that the extinction of bistability which is observed in the material when in the smectic C* phase that is observed when the cell thickness is expanded beyond a limit in the region of 3 microns is attributable to the same cause, the smaller thickness limit necessary for securing planar alignment of the smectic layers being occasioned by the absence of the hexatic

structure of the material when in the C* phase.

It is to be clearly understood that the specific smectic I* material exemplified is not held out to be an optimised material for general display applications. By suitable admixture of other materials the temperature range of the I* phase can be shifted and extended. Furthermore, the switching efficiency can be improved by the incorporation of material with a higher polarisation than that of CE8. By way of example a fourth cell with a 40 microns liquid crystal layer thickness filled with non-chiral (racemic) CE8 to which had been added approximately 6 wt % of a chiral ester providing increased polarisation, and also a longer pitch, is still not too thick to exhibit bistability of operation. Such additives must leave the mixture in the I* or F* phase at the working temperature, but do not individually have to exhibit either of those phases.

By way of further example tests were also carried out on a cell containing the alternative ferroelectric hexatic smectic phase, smectic F*. For this purpose material known to exhibit an F phase (from a paper by P.A.C. Gane et al appearing in Mol. Cryst. Liq. Cryst. 1983, Vol. 100, pp 67 to 74) was rendered ferroelectric by the admixture of a chiral ester dopant. The resulting mixture comprised 20.8 wt % HEPTOBPD (bis-4'-n-heptyloxybenzylidene)-1, 4-phenylenediamine), 79.2 wt % TBBA (terephthalylidene-bis-n-butyl aniline), and 6.1 wt % chiral ester dopant. This mixture exhibits an F* phase from 110$^{o}$C to130$^{o}$C which is depressed by about 9$^{o}$ from that of the undoped HEPTOBPD/TBBA mixture. Figure 3 depicts on a log

log scale how the switching pulse duration varied as a function of switching voltage for an 8.9 microns thick layer of this F* phase material when maintained at a temperature of 124$^{o}$C. The dilution of the chiral dopant by the HEPTOBPD/TBBA mixture provided a pitch helix for the bulk material significantly longer (c.40 microns) than the layer thickness, and hence no pitch lines were seen in this cell.

The ability to construct relatively fast switching bistable display cells with a liquid crystal layer thickness significantly greater than 3 microns is advantageous because it means that much of the technology previously developed for other types of cell, such as twisted nematic and phase change cells, can now be expected to be applied with little modification to the manufacture of these cells; whereas rather more significant changes would likely to be required if the thickness range developed for those other types of cell had to be substantially reduced to bring the thickness beneath the 3 microns threshold. The operation of an I* or F* phase display cell in a light valve mode when placed between appropriately oriented polarisers does however require substantially the same sort of tight control on layer thickness as is required for the surfaced stabilised C* cell since it is similarly dependent upon birefringence effects. The prequisite control of thickness is even tighter if the cell is to be operated in reflex mode having a reflector placed behind the liquid crystal layer. On the other hand control of thickness is significantly relaxed if the cell is not operated in a light valve mode but in a guest-host mode in which a pleochroic dye or dye mixture is incorporated with

the liquid crystal. In this instance the cell isviewed with plane polarised light whose plane of polarisation is aligned so that in one of the bistable orientation states of the liquid crystal the dye molecules show no colour. In the other bistable state the dye is able to absorb colour, though absorption will not be optimised unless the tilt angle of the I* or F* phase were 45$^{o}$. With currently known materials this tilt angle is typically not more than about half this value, and hence it is important to ensure that the cell incorporates sufficient dye to provide adequate absorption. Clearly this is easier to achieve in cells that can be significantly thicker than 3 microns.

CLAIMS:

1. A ferroelectric liquid crystal display cell exhibiting bistability of operation, characterised in that it has a smectic I* or F* phase liquid crystal layer confined between opposed electrode plates (14, 15) whose inward facing surfaces have been treated to promote planar alignment of the adjacent liquid crystal molecules in the same direction at each of the two surfaces, which plates serve to define a liquid crystal layer in the range from 4 to 40 microns.

2. A ferroelectric liquid crystal display cell as claimed in claim 1, characterised in that the liquid crystal layer thickness is less than 20 microns.

3. A ferroelectric liquid crystal display cell as claimed in claim 1 or 2, characterised in that a pleochroic dye is dispersed in the liquid crystal layer.

4. A ferroelectric liquid crystal display cell as claimed in any one of the preceding claims, characterised in that the plates (14, 15) are formed by layers provided on facing surfaces of two transparent sheets spaced apart to contain and define the thickness of the liquid crystal layer retained therebetween by a perimeter seal.

5. A ferroelectric liquid crystal display cell as claimed in claim 4, characterised in that the spacing between the sheets and the thickness of the liquid crystal layer are defined by the thickness of the perimeter seal.

6. A ferroelectric liquid crystal display cell as claimed in claim 4 or 5, characterised in that each of the electrode layers are covered within the display area defined by the perimeter seal with a polymer layer.

7. A ferroelectric liquid crystal display cell as claimed in any one of the preceding claims, characterised in that the electrode plates comprise a layer of indium tin oxide.

8. A ferroelectric liquid crystal display cell as claimed in any one of the preceding claims, characterised in that the liquid crystal layer is formed by the chiral ester:-

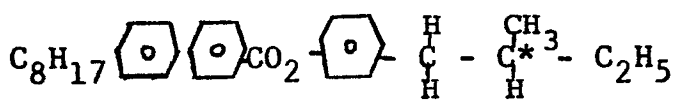 ,

9. A ferroelectric liquid crystal display cell as claimed in any one of claims 1 to 7, characterised in that the liquid crystal layer is formed by a non-chiral (racemic) material including 6 wt % of chiral ester.

10. A ferroelectric liquid crystal display cell as claimed in any one of claims 1 to 7, characterised in that the lqiuid crystal layer contains 20.8 wt % HEPTOBPD (bis-4'-n-heptyloxybenzylidene)-1, 4-phenylenediamine), 79.2 wt % TBBA (terephthalylidene-bis-n-butyl aniline), and 6.1 wt % chiral ester dopant.

Fig. 1.

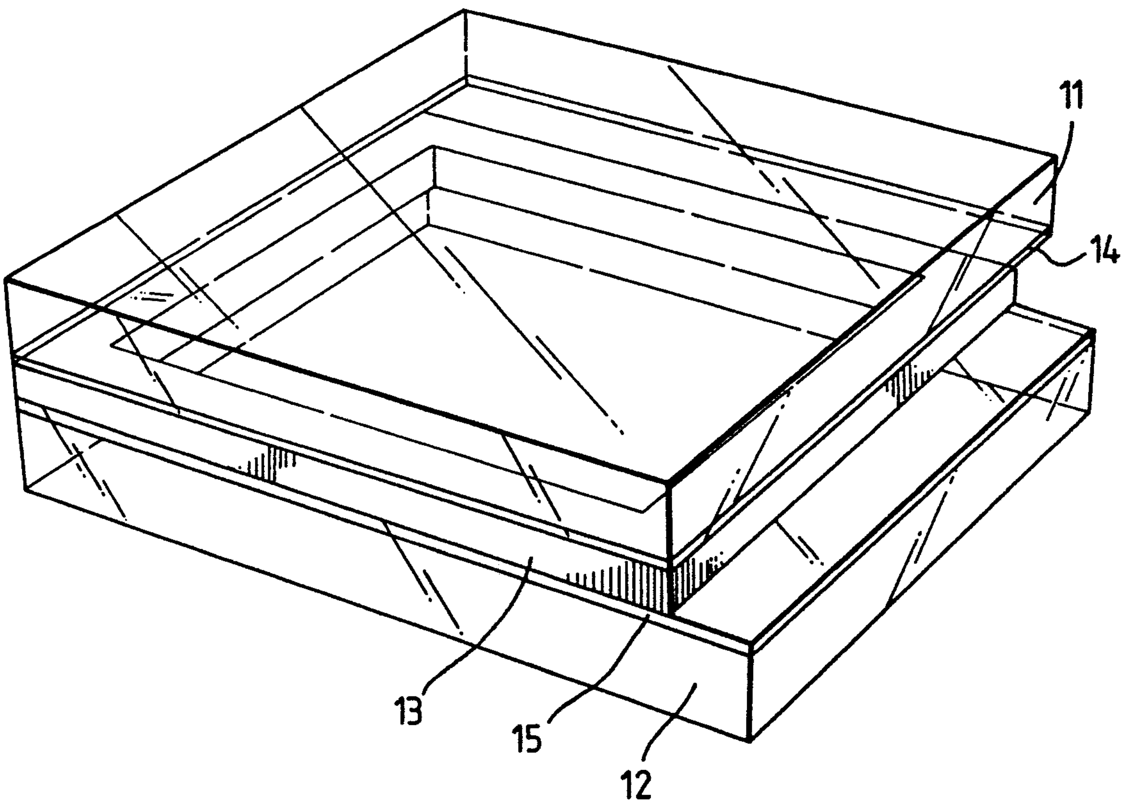

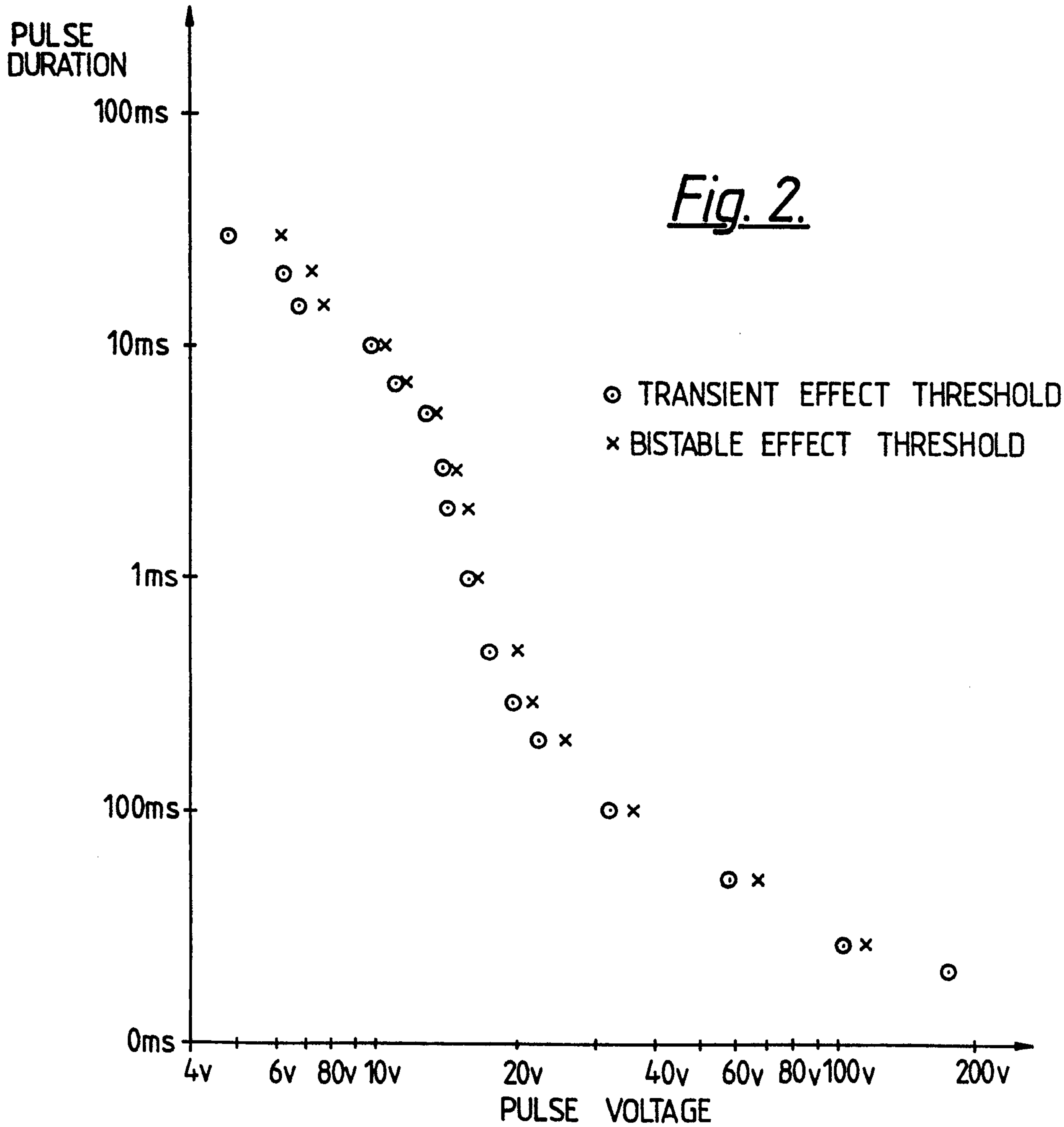
PULSE
DURATION
100ms
10ms
1ms
100ms
0ms
⊙ TRANSIENT EFFECT THRESHOLD
× BISTABLE EFFECT THRESHOLD
4v
6v
80v
10v
20v
40v
60v
80v
100v
200v
PULSE VOLTAGE

Fig. 2.

0179592

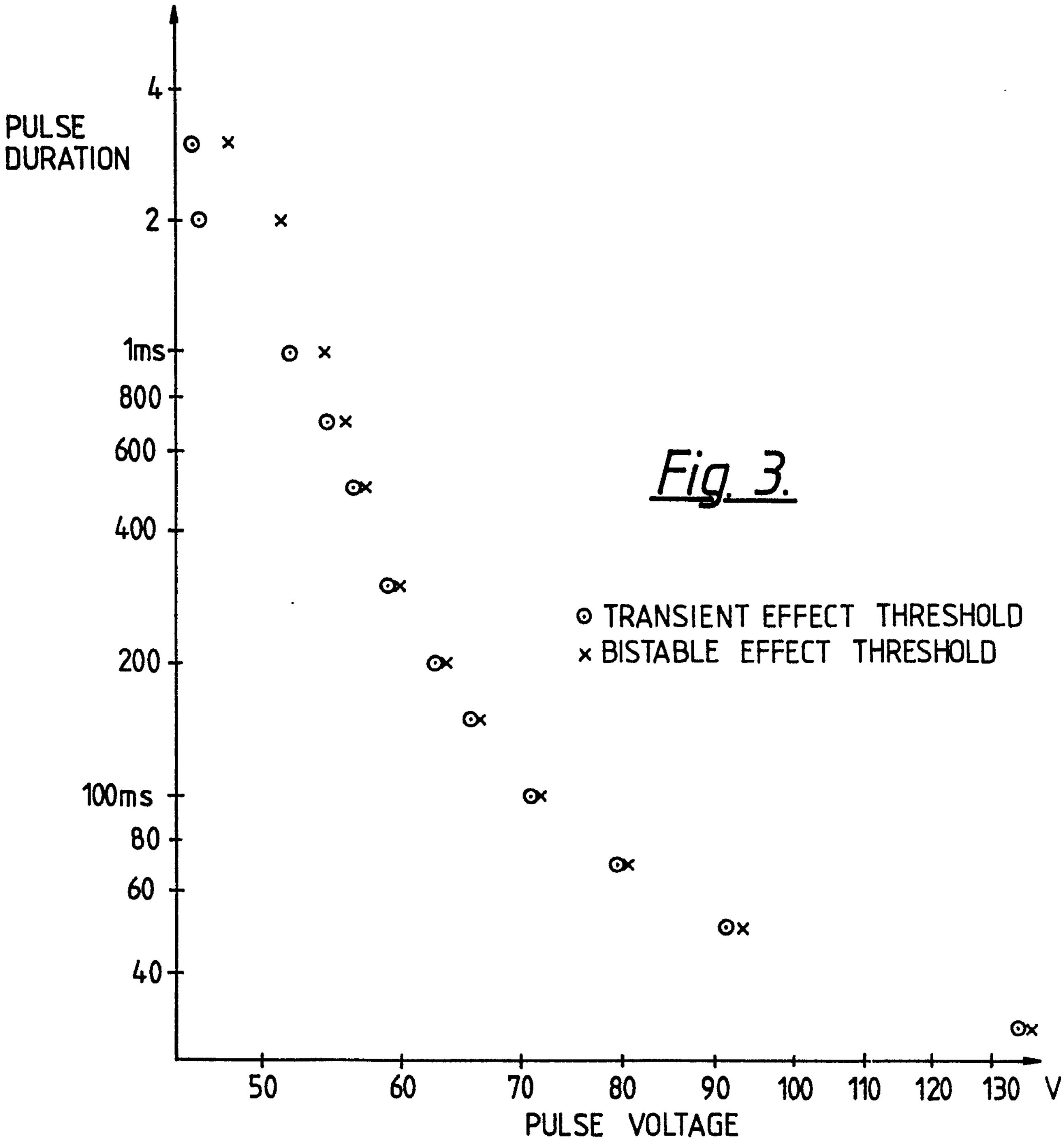


Fig. 3.